# EUROPEAN PATENT APPLICATION

(11) **EP 4 722 558 A1**
(43) Date of publication of application: **08.04.2026**
(21) Application number: 25206539.6
(22) Date of filing: 02.10.2025
(51) Int. Cl.: F16G 11/10, A43C 1/06, A43C 7/08, A44B 11/26

(54) **CORD-LOCK ASSEMBLY**

(30) Priority: 07.10.2024 US 202463704107 P; 25.09.2025 US 202519340184
(71) Applicant: Illinois Tool Works Inc., Glenview IL 60025 (US)
(72) Inventor: KELLER, Steven C., Glenview, 60025 (US); KOLASA, Scott, Glenview, 60025 (US); PONTAOE, John Paul Sana, Glenview, 60025 (US)
(74) Representative: HGF

(57) **Abstract**

A cord-lock assembly (100) that includes an insertion component (104) and a receiving component (102). The receiving component has a hollow body with a cavity and openings for a cord (122) to pass through. The insertion component has a shank (130) that fits into the receiver's cavity, with a channel (110) that slides along a guide ridge (126) inside the cavity. When the insertion piece is pushed into the receiver, it holds the cord tightly in place. The insertion piece also has openings (106) for the cord, and slots (108) that let the cord be inserted from the side. The shank has small ribs (116) near its tip that press the cord against the inside of the cavity for extra grip. The guide ridge and channel can be angled to help align the pieces during insertion.

## Description

### RELATED APPLICATION

The present application claims priority to United States Provisional Patent Application No. 63/704,107, filed October 7, 2024, and entitled "FLAT CORDLOCK," which is hereby incorporated by reference in its entirety.

### BACKGROUND

Cord locks are commonly used to secure and adjust draw cords on a variety of articles, such as clothing, footwear, backpacks, outdoor equipment, etc.. Conventional cord locks are typically formed of plastic. These devices generally rely on an internal spring-loaded mechanism to clamp and hold the cord in place. In use, pressing a portion of the housing compresses the spring, allowing the cord to slide through the openings of the lock. Upon release, the spring engages to pinch and secure the cord, thereby maintaining the desired cord length or tension.

While such spring-loaded cord locks are widely adopted because they provide quick adjustment without the need for tying knots, they require multiple internal components to function (e.g., springs, separate guide elements, etc.). The reliance on these additional parts increases cost, complexity, and potential points of failure.

### SUMMARY

The present disclosure generally relates to a cord-lock assembly, substantially as illustrated by and described in connection with at least one of the figures, as set forth more completely in the claims.

### DRAWINGS

The foregoing and other objects, features, and advantages of the devices, systems, and methods described herein will be apparent from the following description of particular examples thereof, as illustrated in the accompanying figures; where like or similar reference numbers refer to like or similar structures. The figures are not necessarily to scale, emphasis instead being placed upon illustrating the principles of the devices, systems, and methods described herein.
Figure 1a illustrates an assembly view of an example cord-lock assembly in accordance with one aspect of this disclosure.
Figures 1b and 1c illustrate perspective views of the cord-lock assembly with the first insertion component engaged with the receiving component. In Figure 1b, the assembly is shown in a secured position, whereas in Figure 1c, the assembly is shown in an adjustment position.
Figures 1d and 1e illustrate perspective views of the cord-lock assembly with the second insertion component engaged with the receiving component. In Figure 1d, the assembly is illustrated in the secured position, and in Figure 1e, the assembly is illustrated in the adjustment position.
Figures 2a and 2b illustrate, respectively, a perspective view and a side elevational cross-sectional assembly view of the cord-lock assembly taken along cutline A-A of Figure 1b.
Figures 2c and 2d illustrate top plan cross-sectional assembly views of the cord-lock assembly taken along cutline B-B (Figure 1c), where Figure 2c corresponds to the secured position and Figure 2d corresponds to the adjustment position.
Figures 3a and 3b illustrate, respectively, first and second perspective views of the receiving component.
Figures 3c and 3d illustrate, respectively, first and second side elevation views of the receiving component.
Figures 3e and 3f illustrate, respectively, top and bottom plan views of the receiving component.
Figures 3g and 3h illustrate, respectively, front and rear elevation views of the receiving component.
Figures 4a and 4b illustrate, respectively, first and second perspective views of the first insertion component.
Figures 4c and 4d illustrate, respectively, first and second side elevation views of the first insertion component.
Figures 4e and 4f illustrate, respectively, top and bottom plan views of the first insertion component.
Figures 4g and 4h illustrate, respectively, front and rear elevation views of the first insertion component.
Figures 5a and 5b illustrate, respectively, first and second perspective views of the second insertion component.
Figures 5c and 5d illustrate, respectively, first and second side elevation views of the second insertion component.
Figures 5e and 5f illustrate, respectively, top and bottom plan views of the second insertion component.
Figures 5g and 5h illustrate, respectively, front and rear elevation views of the second insertion component.

### DETAILED DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein are not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms. For example, while in some examples a first side is located adjacent or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the disclosure. The use of any and all examples, or exemplary language ("e.g.," "such as," or the like) provided herein, is intended merely to better illuminate the disclosed examples and does not pose a limitation on the scope of the disclosure. The terms "e.g.," and "for example" set off lists of one or more non-limiting examples, instances, or illustrations. No language in the specification should be construed as indicating any unclaimed element as essential to the practice of the disclosed examples.

The term "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z."

Cord locks are used in drawstring applications such as glove wrists, hooded garments, cuffs, and backpack cinch closures. Conventional cord locks are typically cylindrical and include two or more molded plastic components that cooperate to grip / compress a cord when tightened, often relying on a metal spring to increase gripping force between components. Although functional, these devices present several deficiencies. The reliance on metal springs adds cost, complexity, and potential durability concerns. Loose cord ends are often not managed, requiring additional parts or accessories. Conventional cord locks are also not typically tethered to the application, creating inconvenience and increasing the risk of loss. Further, many cord locks are pre-assembled prior to shipment, raising manufacturing and assembly costs for suppliers and reducing flexibility for subcontractors responsible for installation.

The present disclosure relates generally to cord fastening devices, and more particularly to cord locks used for securing and adjusting drawstrings in consumer products such as apparel, gloves, and backpacks. In operation, the disclosed cord lock enables the end-user to tighten a drawstring by pulling the loose cord ends, which causes the cord lock to tighten its grip on the cord. To loosen, the user manipulates one component relative to another to release the grip and permit extension of the cord.

The disclosed cord lock addresses deficiencies with existing cord locks by providing a cord lock that can be shipped as separate components for assembly by customer subcontractors, thereby reducing manufacturing costs. Specifically, the disclosure describes a flat cord lock (as opposed to a cylindrical cord lock, for example) comprising two components. The two components can be an insertion component (e.g., a male component) and a receiving component (e.g., a female component). The disclosed cord lock provides repeatable tightening and loosening functionality without the need for a metal spring.

The disclosed cord lock improves management of loose cord portions through one or more guide loops, eliminating the need for auxiliary cord-retaining components. By eliminating metal springs, the disclosed cord lock further reduces cost while improving durability. At least one of the components may be tethered directly to the application, ensuring the fastener remains secured and convenient to use. For example, the cord may be routed through both the insertion component and the receiving component via one or more cord openings formed therein. These features provides a cord lock that achieves the desired cinching and releasing functions of conventional designs while offering distinct advantages in cost reduction, durability, ease of assembly, and user convenience.

In one example, a cord-lock assembly for securing a cord comprises: a receiving component including a receiver body defining a cavity, wherein a guide ridge is formed within the cavity; and an insertion component including an insertion body and an insertion appendage, wherein the insertion appendage includes a shank terminating in a leading end, wherein the shank comprising a channel configured to engage the guide ridge, and wherein the insertion component is configured to translate linearly relative to the receiving component between a secured position and an adjustment position.

In another example, a cord-lock assembly for securing a cord comprises: a receiving component including a receiver body defining a cavity, wherein the cavity comprises tapered interior sidewalls; and an insertion component including an insertion body and an insertion appendage, wherein the insertion appendage includes a shank terminating in a leading end shaped to compliment the tapered interior sidewalls at a compression region, and wherein the insertion component is configured to translate linearly relative to the receiving component between a secured position and an adjustment position.

In some examples, the cord is compressed at a compression region between a portion of the insertion component and a portion of the receiving component when in the secured position.

In some examples, the cord can slide at the compression region when in the adjustment position.

In some examples, the receiving component includes at least one guide loop configured to receive at portion of the cord.

In some examples, the insertion body defines a pair of openings through which the cord passes.

In some examples, the insertion body further comprises at least one slot allowing lateral insertion of the cord into at least one of the pair of openings.

In some examples, the shank further comprises a plurality of ribs configured to compress the cord at a compression region when in the secured position.

In some examples, the plurality of ribs are configured to compliment tapered interior sidewalls of the cavity.

In some examples, the insertion component comprises a guide loop.

In some examples, the receiving component comprises spaced-apart upper and lower plates joined to at least partially define the cavity, wherein the guide ridge is formed on at least one of the upper plate and the lower plate.

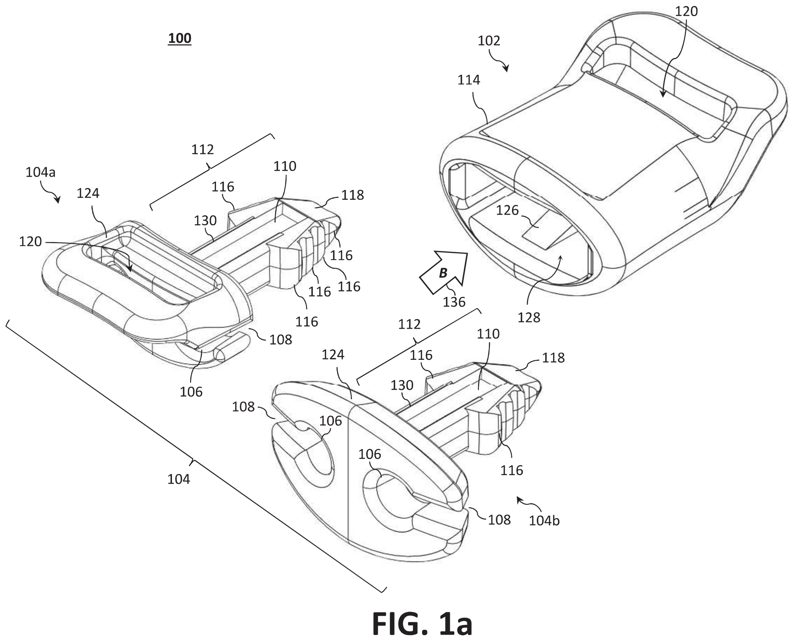

Figure 1a illustrates an assembly view of an example cord-lock assembly 100 in accordance with an aspect of this disclosure. The cord-lock assembly 100 generally comprises a receiving component 102 and an insertion component 104. As shown in Figure 1a, the assembly includes one receiving component 102 and two exemplary insertion components 104 that can be interchangeably used with the receiving component 102 to accommodate a desired application. More specifically, a first insertion component 104a is provided with a guide loop 120, while a second insertion component 104b omits the guide loop 120 to provide, for example, a smaller form factor.

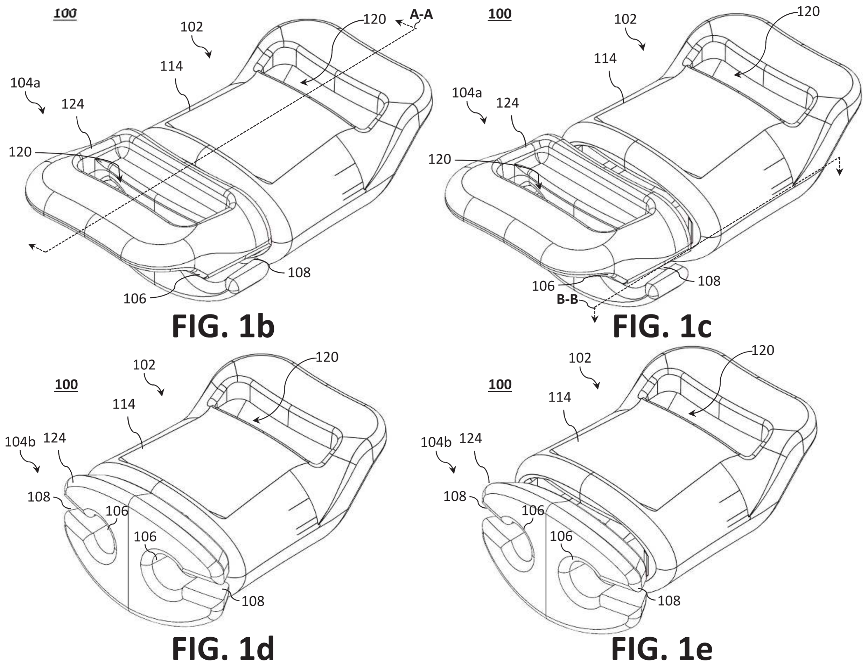

Figures 1b and 1c illustrate perspective views of the cord-lock assembly 100 with the first insertion component 104a engaged with the receiving component 102. In Figure 1b, the cord-lock assembly 100 is shown in a secured position (e.g., a locked, or tightened position), whereas in Figure 1c, the cord-lock assembly 100 is shown in an adjustment position (e.g., a released, or loosened position). Figures 1d and 1e illustrate perspective views of the cord-lock assembly 100 with the second insertion component 104b engaged with the receiving component 102. In Figure 1d, the cord-lock assembly 100 is illustrated in the secured position, and in Figure 1e, the cord-lock assembly 100 is illustrated in the adjustment position.

Each of the receiving component 102 and the insertion component 104 can be fabricated with a body or other housing (e.g., the receiver body 114 and the insertion body 124) having one or more internal or attached components (e.g., the guide ridge 126, etc.), or other features. The cord-lock assembly 100 is generally configured to secure and adjust one or more cords 122, such as drawstrings, laces, strings, ropes, cables, or similar elongated flexible members, and may be used in a wide range of applications including apparel, bags, tents, footwear, marine equipment, outdoor gear, and industrial cabling.

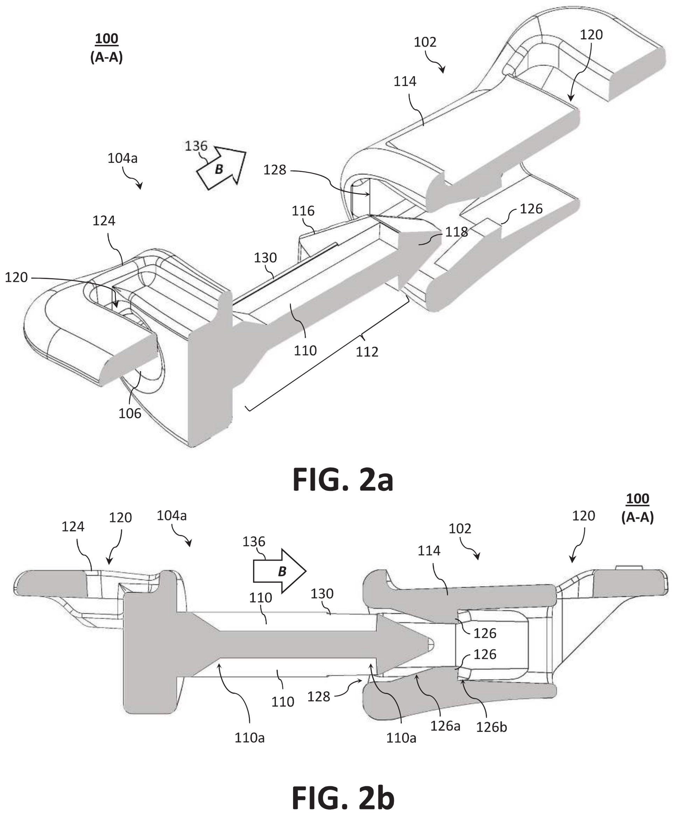

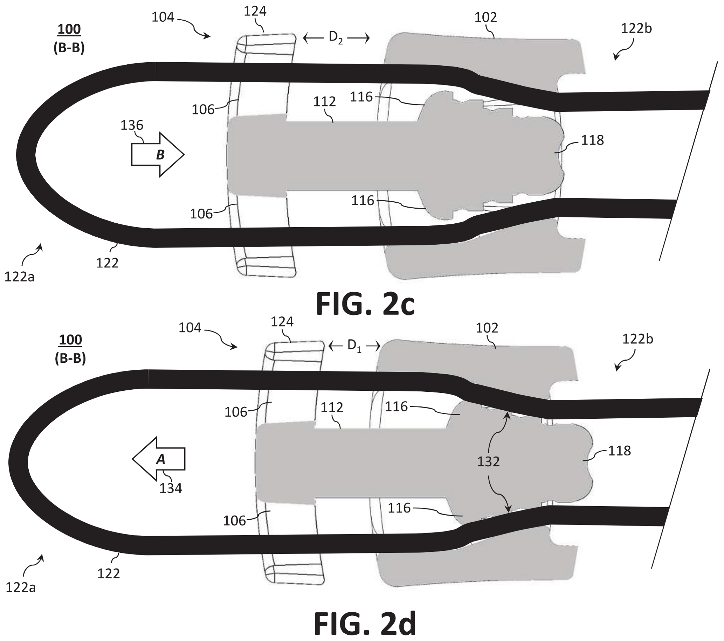

Figures 2a and 2b illustrate, respectively, a perspective view and a side elevational cross-sectional assembly view of the cord-lock assembly 100 with a cord 122 taken along cutline A-A of Figure 1b. Figures 2c and 2d illustrate top plan cross-sectional assembly views of the cord-lock assembly 100 taken along cutline B-B of Figure 1c. Figure 2c corresponds to the secured position, while Figure 2d corresponds to the adjustment position.

The illustrated cord-lock assembly 100 comprises two components, namely the receiving component 102 and the insertion component 104. The receiving component 102 is configured to house and guide the insertion component 104 during assembly, while cooperating with the insertion component 104 to compress, grip, and selectively release a cord 122. As illustrated in Figure 1a, the assembly 100 may include a single receiving component 102 and one of a plurality of insertion components 104 that may be interchangeably engaged with the receiving component 102. More specifically, the example shown includes a first insertion component 104a and a second insertion component 104b, either of which may be used in conjunction with the same receiving component 102 depending upon the requirements of the application.

The first insertion component 104a is provided with a guide loop 120, whereas the second insertion component 104b omits the guide loop 120. The inclusion or omission of the guide loop 120 provides different cord management options for the end user. For example, the guide loop 120 of the first insertion component 104a may be employed to route excess cord ends 122b in a controlled manner, thereby reducing tangling and enhancing aesthetics. By contrast, the second insertion component 104b provides a simplified structure without the guide loop 120, reducing component complexity, shrinking the form factor, and allowing lower-cost manufacture (e.g., due to simplicity and reduce materials usage).

The insertion component 104 serves as the interface with the user, thus it may include, for example, a grippable region or textured surface. In some examples, the width of the insertion body 124 can be wider than the receiving component 102 to enhance the user's grasp. While exemplary receiving component 102 and first and second insertion components 104a and 104b are shown, the receiving component 102 and/or insertion component 104 may alternatively or additionally include other features. Such features may include a grippable region or textured surface (e.g., knurling, ridges, or soft over molded rubber) to facilitate one-handed operation, an enlarged actuation tab or a "pull-friendly" geometry to assist users with limited dexterity, an integrated tethering loop or clip for secure attachment to garments, packs, or equipment, or an integrated locking mechanism (e.g., a secondary latch) to mitigate accidental release. In some examples, the receiving component 102 and/or the insertion component 104 may further incorporate multifunctional elements, such as a whistle, hook, or clip.

Figures 1b and 1c illustrate the cord-lock assembly 100 with the first insertion component 104a engaged with the receiving component 102. In Figure 1b, the assembly is shown in a secured position in which the insertion component 104a is fully inserted into the cavity 128 of the receiving component 102 such that ribs 116 formed on the insertion component 104 compress the cord 122 against an internal surface of the receiver body 114 at a compression region 132. As best illustrated in Figures 2c and 2d, the sidewalls of the cavity 128 can generally taper (or include a taper region) and correspond the angle or shape of a leading end 118 (and the ribs 116, where appliable). In Figure 1c, the assembly is shown in an adjustment position in which the insertion component 104a is partially withdrawn from the receiving component 102, thereby reducing compression on the cord 122 and permitting sliding adjustment of the cord length.

Figures 1d and 1e illustrate the cord-lock assembly 100 with the second insertion component 104b engaged with the receiving component 102. Figure 1d depicts the secured position in which the cord 122 is tightly gripped by the interaction of the ribs 116 and the interior cavity surfaces of the receiving component 102. Figure 1e depicts the adjustment position, similar to Figure 1c, where the insertion component 104b is displaced relative to the receiving component 102 to release pressure on the cord 122, permitting loosening of a drawstring loop 122a or other cinching portion of the cord.

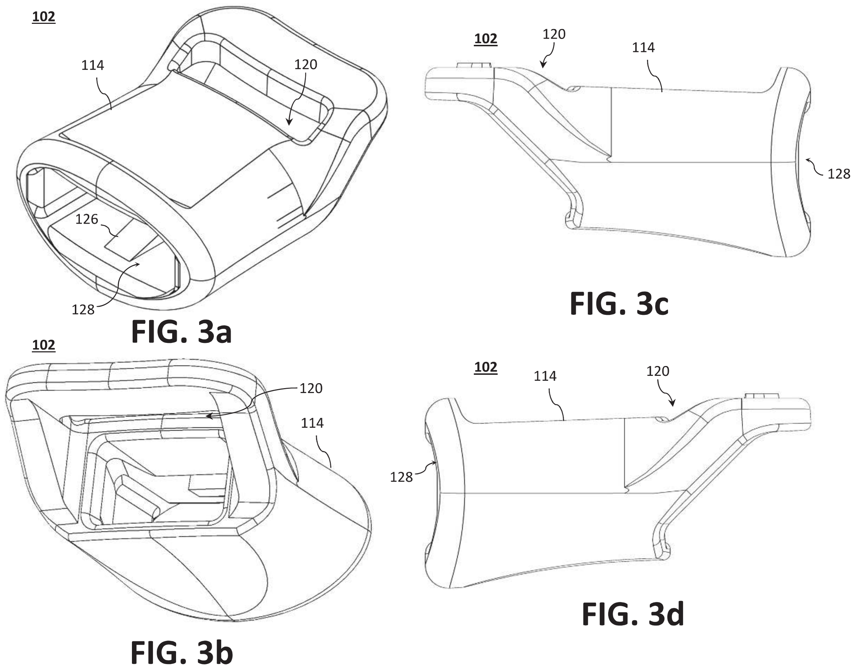

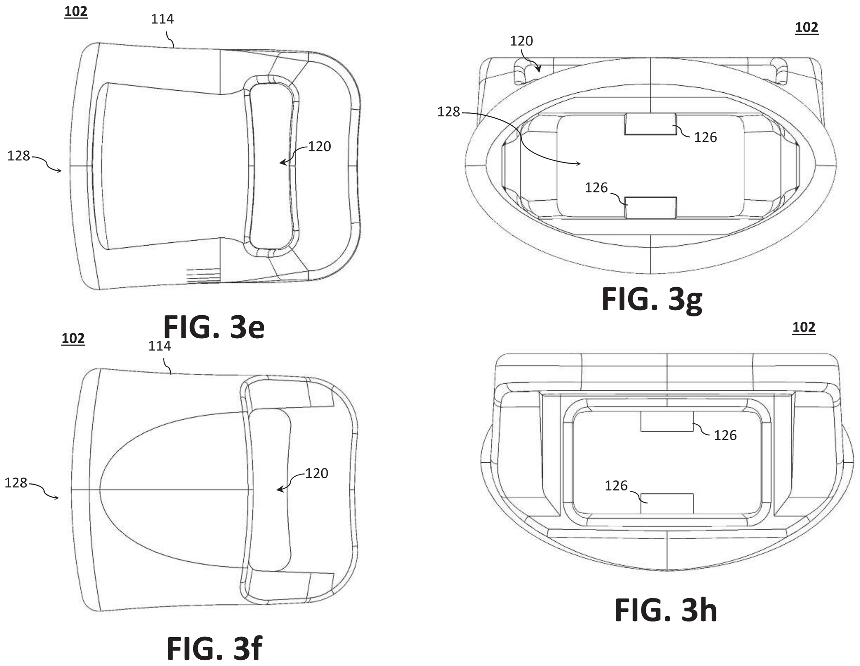

Figures 3a through 3h illustrate detailed views of the receiving component 102. Figures 3a and 3b illustrate, respectively, first and second perspective views of the receiving component 102. Figures 3c and 3d illustrate, respectively, first and second side elevation views of the receiving component 102. Figures 3e and 3f illustrate, respectively, top and bottom plan views of the receiving component 102. Figures 3g and 3h illustrate, respectively, front and rear elevation views of the receiving component 102.

The receiving component 102 comprises a receiver body 114 defining a cavity 128 configured to receive an insertion appendage 112 of the insertion component 104. The receiver body 114 may be formed as an integral molded housing.

In some examples, the receiver body 114 comprises or defines an upper plate and a lower plate joined along opposite sides (e.g., whether directly or via one or more side walls), thereby forming a pocket-like cavity 128. At least one guide loop 120 is formed in the receiver body 114 to permit passage of the cord 122. The guide loop 120 may be circular, oval, slot-like, or polygonal, and may be formed through one wall of the receiver body 114 or through multiple walls in communication with the cavity 128.

The cavity 128 can define a cross section that is a rounded rectangle, substantially rectangular, oval, round, or of other cross-sectional shapes, depending on, for example, the shape of the insertion appendage 112. At least a portion of the sidewalls of the cavity 128 at the compression region 132 can generally taper (or otherwise sloped or angled) to correspond the angle or shape of the leading end 118 at the ribs 116.

Within the cavity 128, a guide ridge 126 is formed as a linear protrusion or rail extending along an inner wall of the receiver body 114 (illustrated on the interior surface of the top and bottle plates). The guide ridge 126 engages a complementary channel 110 formed on the insertion appendage 112, thereby steering the insertion component 104 during insertion and withdrawal. Together, the guide ridge 126 and channel 110 function as a track, permitting the insertion component 104 to translate linearly relative to the receiving component 102 between secured and adjustment positions. As shown in Figures 2a and 2b, the opposed guide ridges 126 are shorter in length than the channels 110, thereby securing the insertion component 104 while still allowing it to slide between the extreme ends of the channels 110 (illustrated as leading end 110a and trailing end 110b). If removal is required, the insertion component 104 can be disengaged from the receiving component 102 by pulling the insertion component 104 in direction A (arrow 134) with sufficient force to cause the opposed guide ridges 126 to flex outwardly (e.g., via flexure of the receiver body 114), allowing the ridges 126 to exit the channels 110.

In some examples, each guide ridge 126 includes a chamfered or tapered leading end 126a to facilitate alignment and insertion into the channels 110, and a flat trailing end 126b to retain the ridge within the channels until sufficient withdrawal force is applied. Correspondingly, each of the channels 110 may include a trailing end 110a shaped to complement the leading end 126a of the ridge, and a leading end 110b shaped to complement the trailing end 126b of the ridge. This arrangement ensures that the shank 130 seats securely within the receiving component 102 while still permitting controlled release under sufficient force.

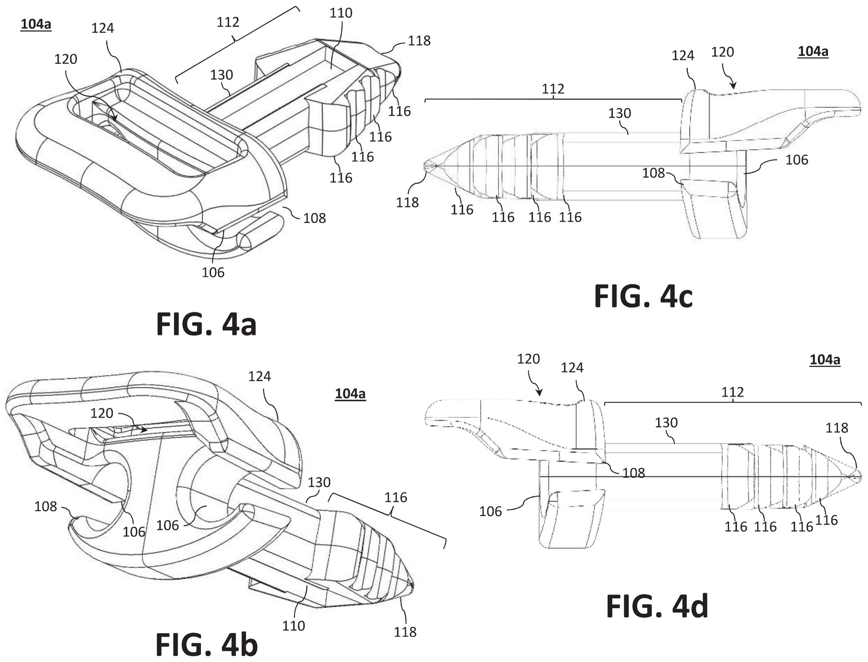

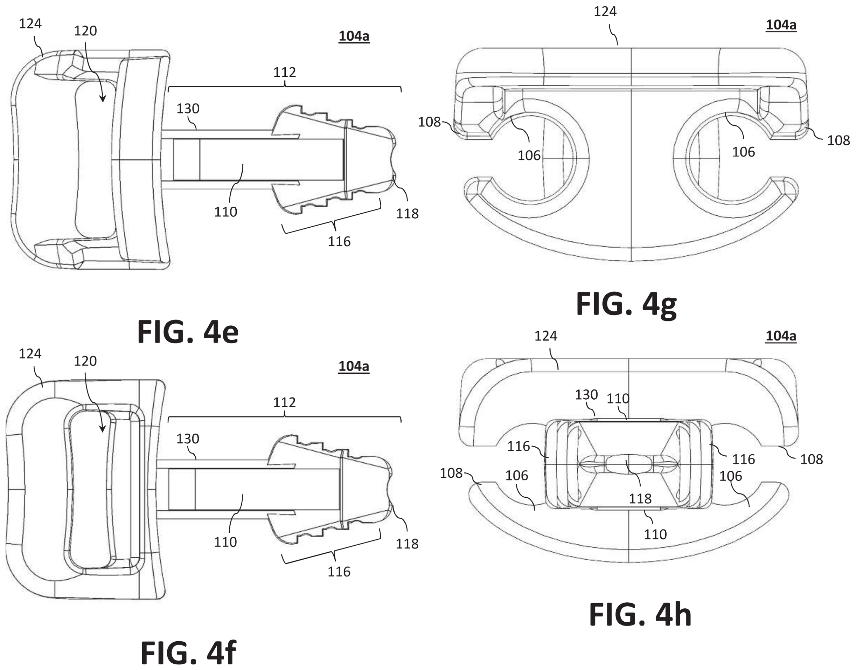

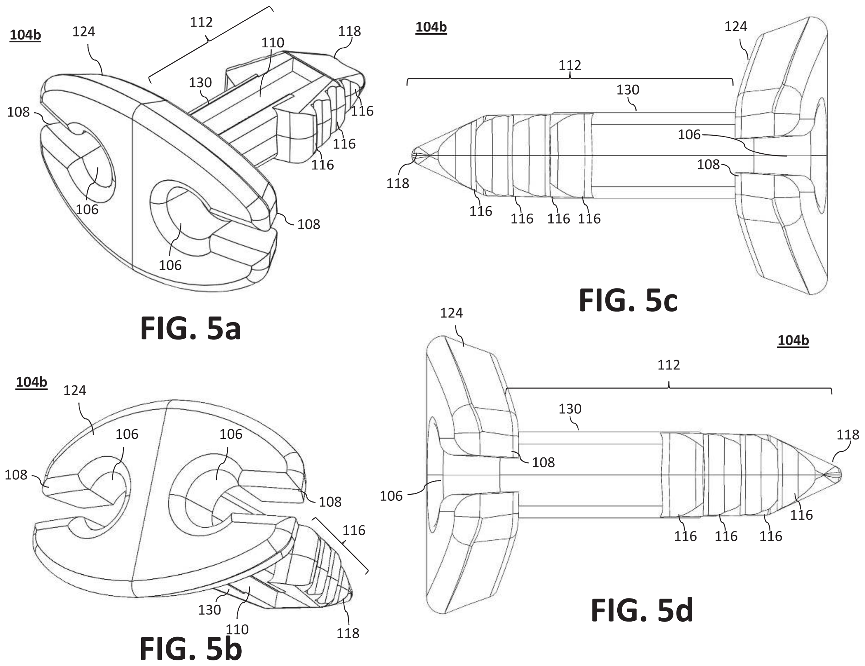

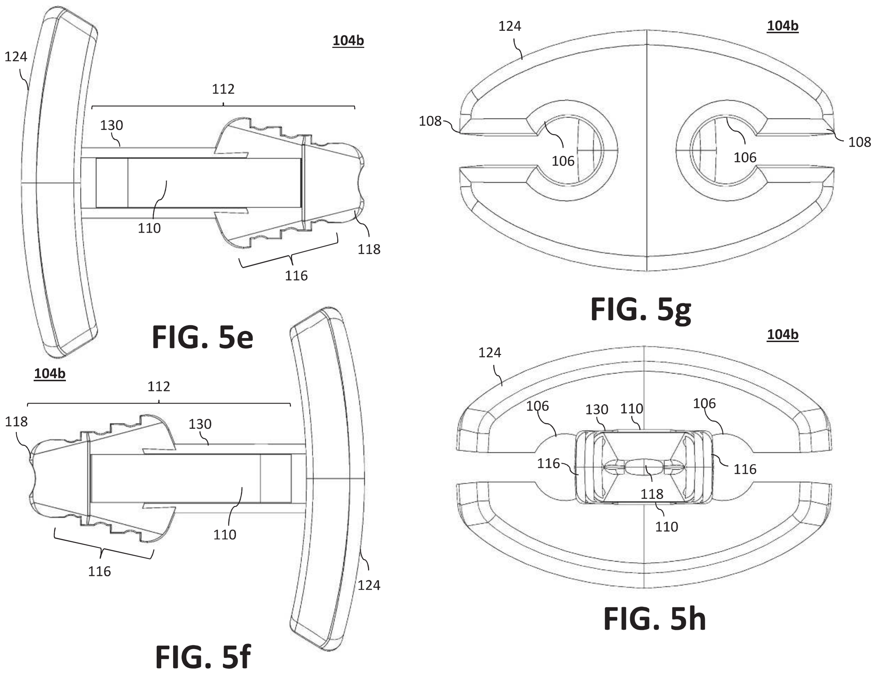

Figures 4a through 4h illustrate detailed views of the first insertion component 104a, while Figures 5a through 5h illustrate detailed views of the second insertion component 104b. Figures 4a and 4b illustrate, respectively, first and second perspective views of the first insertion component 104a. Figures 4c and 4d illustrate, respectively, first and second side elevation views of the first insertion component 104a. Figures 4e and 4f illustrate, respectively, top and bottom plan views of the first insertion component 104a. Figures 4g and 4h illustrate, respectively, front and rear elevation views of the first insertion component 104a. Figures 5a and 5b illustrate, respectively, first and second perspective views of the second insertion component 104b. Figures 5c and 5d illustrate, respectively, first and second side elevation views of the second insertion component 104b. Figures 5e and 5f illustrate, respectively, top and bottom plan views of the second insertion component 104b. Figures 5g and 5h illustrate, respectively, front and rear elevation views of the second insertion component 104b.

The insertion component 104 includes the insertion body 124 and the insertion appendage 112. The insertion body 124 defines at least a pair of cord openings 106 for receiving the cord 122. Each cord opening 106 may be circular, oval, or polygonal, and is sized to closely accommodate the cord 122.

In some examples, the insertion body 124 further comprises one or more slots 108 extending (e.g., extending laterally, as illustrated) through the perimeter of the insertion body 124 to the cord openings 106. The slots 108 allow the cord 122 to be inserted into the cord openings 106 without threading the free end of the cord through, thereby simplifying assembly and re-threading. For example, the slots 108 enable tool-free field replacement so users can swap insertion bodies 124 without cutting the cord 122 or having to re-thread the cord 122. The first insertion component 104a further includes the guide loop 120, whereas the second insertion component 104b omits this feature. The guide loop 120 may serve to anchor one end of the cord 122 or to route loose cord ends 122b.

Extending perpendicularly from the insertion body 124 is the insertion appendage 112. The insertion appendage 112 comprises the shank 130 terminating with the leading end 118. The edges of the leading end 118 may be beveled or rounded to facilitate insertion into the cavity 128 of the receiving component 102. Along the shank 130, a pair of external channels 110 is formed, extending longitudinally along at least one side of the shank 130, or two opposed sides of the shank 130 (as illustrated). Each channel 110 is configured to receive a guide ridge 126 formed within the receiving component 102.

On, at, or near the leading end 118 of the shank 130, a plurality of ribs 116 are formed. In the illustrated example, four ribs 116 are provided, arranged on opposing sides of the shank. The ribs 116 protrude outward from the shank 130 and are configured to engage the cord 122 when the insertion appendage 112 is inserted into the cavity 128. The ribs 116 compress the cord 122 against an internal wall of the receiver body 114 when in the secure position, thereby securing the cord 122 in place at the compression region 132. Each of the ribs 116 may be linear, arcuate, angled, segmented, or continuous, and may be formed with varying stiffness to alter the gripping force.

The plurality of ribs 116 on each side can be stepped or arranged on an angled surface of the leading end 118 such that the overall shape of the leading end 118 is angled or sloped to engaged the generally tapered interior sidewalls of the cavity 128. In the illustrated example, the leading end 118 and plurality of ribs 116 define a generally trapezoidal or triangular end. When a cord 122 is installed and the cord-lock assembly 100 is in the secured position, the cord 122 is pinched between the plurality of ribs 116 and the tapered interior sidewalls of the cavity 128 at the compression region 132. When the insertion 104 is shifted out of the cavity 128 slightly to assume the adjustment position, a gap between the plurality of ribs 116 and the tapered interior sidewalls of the cavity 128 is formed at the compression region 132, thus loosening and releasing the cord 122 such that the cord 122 can slide or otherwise slip at the compression region 132.

The receiving component 102 and the insertion component 104 may be manufactured using a variety of techniques depending upon the desired balance of strength, durability, cost, and production volume. In one example, both parts are fabricated by injection molding of a thermoplastic material such as acrylonitrile butadiene styrene (ABS), polyvinyl chloride (PVC), polyethylene (PE), polypropylene (PP), polyamide (nylon), or other engineered polymers. Injection molding allows tight dimensional control of features such as the cavity 128, guide ridge 126, and ribs 116, which must maintain close tolerances to achieve reliable gripping action. In some examples, the receiving component 102 and the insertion component 104 may be manufactured using a glow-in-the-dark or high-visibility accents for nighttime or safety use.

Still further examples contemplate additive manufacturing, including three-dimensional (3D) printing techniques such as fused deposition modeling (FDM), selective laser sintering (SLS), stereolithography (SLA), digital light processing (DLP), binder jetting, powder bed fusion, or directed energy deposition. Additive manufacturing is particularly advantageous for rapid prototyping or limited production runs because it eliminates the need for costly mold tooling and allows for rapid iteration of design features such as the geometry of channel 110 and guide ridge 126.

In another example, the receiving component 102 and insertion component 104 may be formed from metallic materials such as aluminum, stainless steel, or zinc alloy, particularly for heavy-duty applications requiring enhanced load-bearing capacity or resistance to wear. Metal versions may be produced by die casting, CNC machining, stamping, or powder metallurgy.

In some cases, hybrid construction may be employed. For example, the receiving component 102 may be injection molded, while the insertion component 104 is machined or additively manufactured, thereby leveraging the strengths of each technique (or vice versa). Co-molding may also be employed, allowing for integration of different materials into a single part-for example, over molding a soft elastomer onto a rigid substrate to provide enhanced cord retention or tactile feel.

The components of the cord-lock assembly 100 may be further treated with surface finishes, coatings, or texturing to enhance performance. For example, ribs 116 may be coated with a high-friction elastomer to increase grip on the cord 122, while external surfaces of the receiver body 114 may be polished, textured, or painted for aesthetic purposes.

In operation, the cord-lock assembly 100 alternates between two primary states: a secured position and an adjustment position.

In the secured position, as shown in Figures 1b, 1d, and 2d, the insertion appendage 112 of the insertion component 104 is fully inserted into the cavity 128 of the receiving component 102. The ribs 116 located adjacent to the leading end 118 engage the cord 122 and press it against an internal wall of the receiver body 114 (e.g., at the compression region 132). This compressive action prevents relative sliding of the cord 122 and locks the cinching portion 122a of the cord in place. The channel 110 and guide ridge 126 ensure proper alignment of the insertion appendage 112 within the cavity 128, thereby maintaining consistent grip.

In the adjustment position, as shown in Figures 1c and 1e, the insertion appendage 112 is withdrawn partially from the cavity 128, reducing the compressive force applied by ribs 116 to the cord 122. This reduced engagement allows the cord 122 to slide freely at the compression region 132 and, for example, through the cord openings 106 of the insertion body 124 and the guide loop 120 of the receiving component 102. The user may then tighten the cord 122 by pulling the free ends 122b in a cinching direction 134, or loosen the cord 122 by pulling the receiving component 102 and insertion component 104 apart in a direction opposite to the cinching direction, as indicated by arrow 136.

Transition between the secured and adjustment positions may be repeated multiple times without substantial wear on the components, owing to the configuration of, for example, the ribs 116 and the alignment features provided by channel 110 and guide ridge 126.

In some examples, the receiving component 102 may include multiple guide loops 120, arranged on different faces of the receiver body 114, to accommodate cords entering from different directions.

In other examples, the insertion appendage 112 may include more than one channel 110, arranged circumferentially around the shank 130, thereby engaging multiple guide ridges 126 within the cavity 128. This multi-channel design improves stability of the insertion component 104 within the receiving component 102 and reduces the likelihood of rotational misalignment.

In further examples, the ribs 116 may be arranged in staggered rows along the length of the shank 130, thereby providing multiple stages of cord engagement as the insertion component 104 is urged into the cavity 128. Such staged engagement may allow progressive tightening of the cord 122, offering the user finer control over cinching.

While Figures 1a through 5h illustrate insertion components 104 configured to secure a single cord 122, other examples may be designed to secure two or more cords simultaneously. For example, the insertion body 124 may define multiple pairs of cord openings 106 and corresponding slots 108, each arranged to receive a separate cord.

Still further examples may reverse the arrangement of the alignment features. For example, the channel 110 may be formed within the cavity 128 of the receiving component 102, while the guide ridge 126 may be provided on the shank 130 of the insertion appendage 112.

The cord-lock assembly 100 has wide applicability across consumer, commercial, and industrial sectors. In apparel, it may be used to secure drawstrings on jackets, pants, or hoods. In footwear, it may serve as a lace-lock system. In outdoor and sporting equipment, it may be applied to tents, backpacks, or sleeping bags to adjust and secure cords under variable loads. In marine applications, the cord-lock assembly 100 may secure rigging, tarps, or flotation devices, while resisting corrosion when constructed from appropriate materials. In medical or industrial settings, the cord-lock assembly 100 may serve to manage tubing, hoses, or cabling, where reliable and repeatable adjustment is required.

Because the disclosed design eliminates reliance on springs or other auxiliary components, it is particularly suited for applications where reliability and durability are paramount. The simplified construction reduces part count, assembly steps, and cost, while maintaining a robust and repeatable cinching function.

While the present device and/or system have been described with reference to certain examples, it will be understood by those skilled in the art that various changes may be made and equivalents may be substituted without departing from the scope of the present device and/or system. In addition, many modifications may be made to adapt a particular situation or material to the teachings of the present disclosure without departing from its scope. For example, components of disclosed examples may be combined, divided, re-arranged, and/or otherwise modified. Therefore, the present device and/or system are not limited to the particular examples disclosed. Instead, the present device and/or system will include all examples falling within the scope of the appended claims, both literally and under the doctrine of equivalents.

Certain embodiments of the invention are described in the following clauses:
Clause 1. A cord-lock assembly for securing a cord, the cord-lock assembly comprising:
   a receiving component including a receiver body defining a cavity,
      wherein a guide ridge is formed within the cavity; and
   an insertion component including an insertion body and an insertion appendage,
      wherein the insertion appendage includes a shank terminating in a leading end,
      wherein the shank comprising a channel configured to engage the guide ridge, and
      wherein the insertion component is configured to translate linearly relative to the
   receiving component between a secured position and an adjustment position.
Clause 2. The cord-lock assembly of clause 1, wherein the cord is compressed at a compression region between a portion of the insertion component and a portion of the receiving component when in the secured position.
Clause 3. The cord-lock assembly of clause 2, wherein the cord can slide at the compression region when in the adjustment position.
Clause 4. The cord-lock assembly of clause 1, wherein the receiving component includes at least one guide loop configured to receive at portion of the cord.
Clause 5. The cord-lock assembly of clause 1, wherein the insertion body defines a pair of openings through which the cord passes.
Clause 6. The cord-lock assembly of clause 5, wherein the insertion body further comprises at least one slot allowing lateral insertion of the cord into at least one of the pair of openings.
Clause 7. The cord-lock assembly of clause 1, wherein the shank further comprises a plurality of ribs configured to compress the cord at a compression region when in the secured position.
Clause 8. The cord-lock assembly of clause 7, wherein the plurality of ribs are configured to compliment tapered interior sidewalls of the cavity.
Clause 9. The cord-lock assembly of clause 1, wherein the insertion component comprises a guide loop.
Clause 10. The cord-lock assembly of clause 1, wherein the receiving component comprises spaced-apart upper and lower plates joined to at least partially define the cavity, wherein the guide ridge is formed on at least one of the upper plate and the lower plate.
Clause 11. A cord-lock assembly for securing a cord, the cord-lock assembly comprising:
   a receiving component including a receiver body defining a cavity,
      wherein the cavity comprises tapered interior sidewalls; and
   an insertion component including an insertion body and an insertion appendage,
      wherein the insertion appendage includes a shank terminating in a leading end
   shaped to compliment the tapered interior sidewalls at a compression region, and
      wherein the insertion component is configured to translate linearly relative to the receiving component between a secured position and an adjustment position.
Clause 12. The cord-lock assembly of clause 11, wherein the shank comprises a channel configured to engage a guide ridge is formed within the cavity.
Clause 13. The cord-lock assembly of clause 11, wherein the cord is compressed at the compression region between a portion of the insertion component and a portion of the receiving component when in the secured position.
Clause 14. The cord-lock assembly of clause 13, wherein the cord can slide at the compression region when in the adjustment position.
Clause 15. The cord-lock assembly of clause 11, wherein the receiving component includes at least one guide loop configured to receive at portion of the cord.
Clause 16. The cord-lock assembly of clause 11, wherein the insertion body defines a pair of openings through which the cord passes.
Clause 17. The cord-lock assembly of clause 16, wherein the insertion body further comprises at least one slot allowing lateral insertion of the cord into at least one of the pair of openings.
Clause 18. The cord-lock assembly of clause 11, wherein the shank further comprises a plurality of ribs configured to compress the cord at a compression region when in the secured position.
Clause 19. The cord-lock assembly of clause 11, wherein the insertion component comprises a guide loop.
Clause 20. The cord-lock assembly of clause 12, wherein the receiving component comprises spaced-apart upper and lower plates joined to at least partially define the cavity, wherein the guide ridge is formed on at least one of the upper plate and the lower plate.

## Claims

1. A cord-lock assembly for securing a cord, the cord-lock assembly comprising:
a receiving component including a receiver body defining a cavity,
wherein a guide ridge is formed within the cavity; and
an insertion component including an insertion body and an insertion appendage,
wherein the insertion appendage includes a shank terminating in a leading end,
wherein the shank comprising a channel configured to engage the guide ridge, and
wherein the insertion component is configured to translate linearly relative to the
receiving component between a secured position and an adjustment position.

2. The cord-lock assembly of claim 1, wherein the cord is compressed at a compression region between a portion of the insertion component and a portion of the receiving component when in the secured position, and optionally
wherein the cord can slide at the compression region when in the adjustment position.

3. The cord-lock assembly of claim 1 or claim 2, wherein the receiving component includes at least one guide loop configured to receive at portion of the cord.

4. The cord-lock assembly of any one of claims 1 to 3, wherein the insertion body defines a pair of openings through which the cord passes, and optionally
wherein the insertion body further comprises at least one slot allowing lateral insertion of the cord into at least one of the pair of openings.

5. The cord-lock assembly of any one of claims 1 to 4, wherein the shank further comprises a plurality of ribs configured to compress the cord at a compression region when in the secured position, and optionally
wherein the plurality of ribs are configured to compliment tapered interior sidewalls of the cavity.

6. The cord-lock assembly of any one of claims 1 to 5, wherein the insertion component comprises a guide loop.

7. The cord-lock assembly of any one of claims 1 to 6, wherein the receiving component comprises spaced-apart upper and lower plates joined to at least partially define the cavity, wherein the guide ridge is formed on at least one of the upper plate and the lower plate.

8. A cord-lock assembly for securing a cord, the cord-lock assembly comprising:
a receiving component including a receiver body defining a cavity,
wherein the cavity comprises tapered interior sidewalls; and
an insertion component including an insertion body and an insertion appendage,
wherein the insertion appendage includes a shank terminating in a leading end shaped to compliment the tapered interior sidewalls at a compression region, and
wherein the insertion component is configured to translate linearly relative to the receiving component between a secured position and an adjustment position.

9. The cord-lock assembly of claim 8, wherein the shank comprises a channel configured to engage a guide ridge is formed within the cavity.

10. The cord-lock assembly of claim 8 or claim 9, wherein the cord is compressed at the compression region between a portion of the insertion component and a portion of the receiving component when in the secured position, and optionally
wherein the cord can slide at the compression region when in the adjustment position.

11. The cord-lock assembly of any one of claims 8 to 10, wherein the receiving component includes at least one guide loop configured to receive at portion of the cord.

12. The cord-lock assembly of any one of claims 8 to 11, wherein the insertion body defines a pair of openings through which the cord passes, and optionally
wherein the insertion body further comprises at least one slot allowing lateral insertion of the cord into at least one of the pair of openings.

13. The cord-lock assembly of any one of claims 8 to 12, wherein the shank further comprises a plurality of ribs configured to compress the cord at a compression region when in the secured position.

14. The cord-lock assembly of any one of claims 8 to 13, wherein the insertion component comprises a guide loop.

15. The cord-lock assembly of claim 9, wherein the receiving component comprises spaced-apart upper and lower plates joined to at least partially define the cavity, wherein the guide ridge is formed on at least one of the upper plate and the lower plate.
